# EUROPÄISCHE PATENTSCHRIFT

(11) **EP 2 705 224 B1**
(45) Veröffentlichungstag und Bekanntmachung des Hinweises auf die Patenterteilung: **31.08.2016**
(21) Anmeldenummer: 12719575.8
(22) Anmeldetag: 25.04.2012
(51) Int. Cl.: F01K 3/06, F01K 3/12, F01K 7/34, F01K 7/22, F01K 7/40, F01K 13/02, F28D 20/00, F01K 3/00, F28D 20/02

(54) **REGELSYSTEM ZUR ANPASSUNG DER LEISTUNG EINER DAMPFTURBINE AN EINE VERÄNDERTE LAST**
CONTROL SYSTEM FOR MATCHING THE OUTPUT OF A STEAM TURBINE TO A CHANGED LOAD
SYSTÈME DE RÉGULATION SERVANT À ADAPTER LA PUISSANCE D'UNE TURBINE À VAPEUR À UNE VARIATION DE CHARGE

(30) Priorität: 05.05.2011 DE 102011100517
(43) Veröffentlichungstag der Anmeldung: 12.03.2014
(73) Patentinhaber: STEAG New Energies GmbH, 66115 Saarbrücken (DE)
(72) Erfinder: DENGEL, Andreas, 66539 Neunkirchen (DE)
(74) Vertreter: Bernhardt, Reinhold
(86) Internationale Anmeldenummer: PCT/EP2012/001757
(87) Internationale Veröffentlichungsnummer: WO 2012/150008

(56) Entgegenhaltungen:
- FR-A- 1 396 379
- GB-A- 1 524 236
- US-A1- 2006 266 039
- US-A1- 2009 125 152

## Beschreibung

Die Erfindung betrifft ein Regelsystem zur Anpassung der Leistung einer Dampfturbine an eine veränderte Last, insbesondere zur kurzfristigen Anpassung der Leistung einer Kraftwerksdampfturbine an veränderte Netzlasten z.B. im Rahmen der sog. Primärreglung, mit einem Wärmespeicher, der bei einer entsprechend verringerter Last erhöhten Menge von der Dampfturbine abgezapften Dampfes dem abgezapften Dampf Wärme entnimmt und der bei einer entsprechend erhöhter Last verringerten Menge von der Dampfturbine abgezapften Dampfes Wärme an einen die Dampfturbine versorgenden Dampf-/Speisewasserkreislauf abgibt.

Ein Regelsystem solcher Art geht aus der GB 1 524 236 hervor. Als Wärmespeicher dienen in diesem Regelsystem ein warmer und ein kalter Behälter, wobei von letzterem ein Speichermedium unter Wärmeaufnahme aus abgezapftem Dampf in den warmen Behälter überführt wird. Bei Turbinenlast und Reduzierung oder Wegfall abgezapften Dampfes wird das Speichermedium vom warmen zum kalten Behälter rückgeführt, wobei Wärme an eine gesonderte Speisewasserleitung und den Zwischenüberhitzer abgegeben wird.

Die US 2006/0266039 A1 beschreibt ein Regelsystem, in welchem Kesselspeisewasser durch Solarenergie erwärmt wird, um die verringerte Vorwärmung bei reduzierter Menge an abgezweigten Dampf auszugleichen.

Bekanntermaßen werden kurzfristige Schwankungen der Stromnetzlast von den an der Primärregelung beteiligten Kraftwerken aufgefangen. Hierbei kommt neben dem sog. Kondensatstopp- das bekannte Androsselungsverfahren zum Einsatz, bei dem der Kraftwerksdampfturbine aus dem Dampferzeugerkessel ein gedrosselter Dampfstrom zugeführt wird. Zur kurzfristigen Leistungserhöhung oder-minderung wird der Drosselungsgrad erhöht oder gemindert. Die Anwendung beider Verfahren führt zum Betrieb der Kraftwerksanlage mit vermindertem Wirkungsgrad.

Aus der WO 2006/072576 A1 ist eine Regelungssystem bekannt, bei dem zur kurzfristigen Erhöhung der ins Netz abgebbaren Leistung elektrolytisch Wasserstoff produzierende Zellen abgeschaltet und bei verminderter Netzleistungsanforderung zugeschaltet werden. Die Kraftwerksanlage kann so jederzeit mit optimalem Wirkungsgrad betrieben werden. Der erzeugte, energiereiche Wasserstoff lässt sich in unterschiedlicher Weise nutzen.

Der Erfindung liegt die Aufgabe zugrunde, eine neues, geringeren Bauaufwand erforderndes Regelungssystem der eingangs erwähnten Art zu schaffen.

Das diese Aufgabe lösende Regelsystem nach der Erfindung ist dadurch gekennzeichnet, dass der Wärmespeicher ein Wärme bei konstanter Temperatur aufnehmender bzw. abgebender Latentwärmespeicher ist, der zur Abgabe von Wärme an eine durch den abgezapften Dampf gespeiste Vorwärmestrecke des Dampf-/Speisewasserkreislaufs und zur Aufnahme von Wärme aus einer die Vorwärmestrecke mit abgezapftem Dampf speisenden Leitung vorgesehen ist.

Die erfindungsgemäße Änderung der Turbinenleistung durch Erhöhung oder Minderung der abgezapften Dampfmenge erlaubt in Verbindung mit dem erfindungsgemäßen Latentwärmespeicher den Betrieb der Dampfturbine, zumindest im zeitlichen Mittel, bei gleichbleibendem Wirkungsgrad. Ein kurzfristiges Nachregeln der Kesselleitung kann entfallen.

Der Wärmespeicher ist zur Abgabe von Wärme an eine durch den abgezapften Dampf gespeiste Vorwärmerstrecke des Dampf-/Speisewasserkreislaufs vorgesehen, insbesondere zur Wärmeaufnahme und Wärmeabgabe jeweils unter Konstanthaltung der in die Vorwärmerstrecke auf das Speisewasser insgesamt übertragenden Wärme. Trotz geänderter Menge an abgezapftem Dampf ändert sich in der Vorwärmerstrecke nichts, das Speisewasser gelangt mit gleichbleibender Temperatur in dem Dampferzeugerkessel.

In einer bevorzugten Ausführungsform der Erfindung wird der abgezapfte Dampf im Hochdruckbereich der Dampfturbine abgezapft.

Entsprechend ist vorzugsweise der Wärmespeicher zur Abgabe der Wärme an den Dampf-/Speisewasserkreislauf im Hochdruckbereich des Dampf-/Speisewasserkreislaufs vorgesehen.

In weiterer Ausgestaltung der Erfindung kann der Wärmespeicher Wärme auch aus einer anderen Wärmequelle aufnehmen, insbesondere dann, wenn die Bilanz der erforderlichen Regelungsenergie negativ ist. Es wäre denkbar, sofern nicht Abwärme zur Verfügung steht, den Wärmespeicher gesondert zu beheizen, z.B. auch elektrisch in Zeiten eines Stromüberangebots.

In einer Ausführungsform der Erfindung können mehrere, Wärme bei unterschiedlichen Temperaturen aufnehmende bzw. abgebende Wärmespeicher vorgesehen sein, die durch Abzapfungen in unterschiedlichen Druck- bzw. Temperaturbereichen der Turbine gespeist werden.

In einer Ausführungsform der Erfindung weist der Latentwärmespeicher als Speichersubstanz eine Salzschmelze auf.

Die Erfindung wird nachfolgend anhand von Ausführungsbeispielen und der beiliegenden, sich auf eines dieser Ausführungsbeispiele beziehenden Zeichnungen weiter erläutert. Es zeigen:
- Fig. 1: eine schematische Ansicht einer Kraftwerksanlage mit einer Dampfturbine, und
- Fig. 2: eine den erfindungsgemäßen Wärmespeicher zeigende Teilansicht der Kraftwerksanlage von Fig. 1.

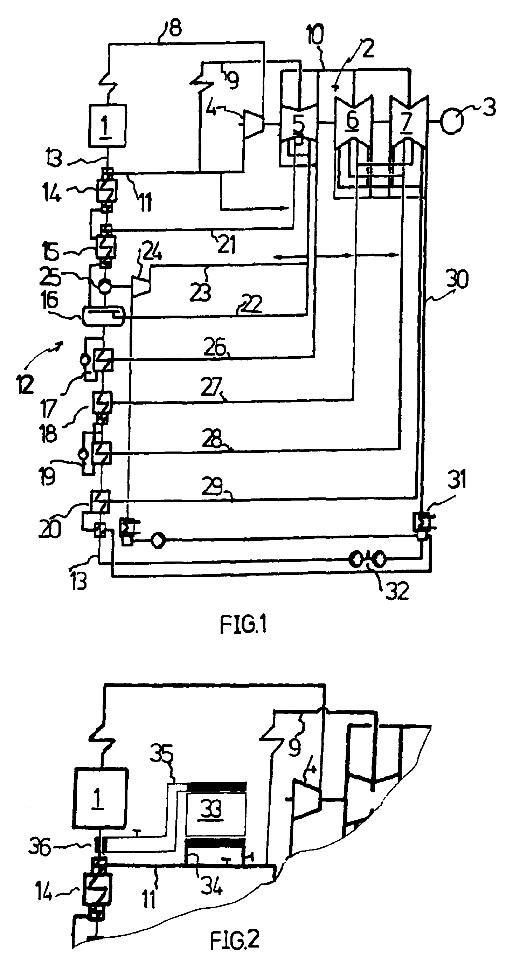

Eine in Fig. 1 schematisch dargestellte Kraftwerksanlage umfasst einen mit Steinkohle beheizten Dampferzeugerkessel 1, eine Dampfturbine 2 und einen durch die Dampfturbine angetriebenen Generator 3. Die Dampfturbine 2 weist einen Hochdruckteil 4, einen Mitteldruckteil 5 sowie Niederdruckteile 6 und 7 auf.

Dampf aus dem Dampferzeugerkessel 1 gelangt über eine Leitung 8 in den Hochdruckteil 4, im Hochdruckteil 4 entspannter Dampf über eine Leitung 9 und eine Zwischenüberhitzung in den Mitteldruckteil 5 und im Mitteldruckteil 5 abgearbeiteter Dampf über eine Leitung 10 in die Niederdruckteile 6 und 7.

Von der Leitung 9 zweigt eine Leitung 11 ab, die zu einem ersten Hochdruckvorwärmer 14 einer Vorwärmstrecke 12 für Speisewasser führt, das dem Dampferzeugerkessel 1 über eine Leitung 13 zugeleitet wird. Dem Hochdruckvorwärmer 14 ist ein weiterer Hochdruckvorwärmer 15 vorgeschaltet, der mit einem Speisewasserbehälter 16 in Verbindung steht, wobei dem Speisewasserbehälter 16 eine Reihe von vier Niederdruckvorwärmern 17,18,19,20 vorgeschaltet ist.

In den Hochdruckvorwärmer 15 mündet eine Leitung 21 zum Abzapfen von Dampf aus dem Mitteldruckteil 5 der Turbine 2, wobei im Mitteldruckteil nur teilweise abgearbeiteter, noch unter verhältnismäßig hohem Druck stehender Dampf aus der Turbine abgezweigt wird. In dem Mitteldruckteil 5 weiter abgearbeiteter Dampf gelangt über eine Leitung 22 direkt in den Speisewasserbehälter 16. Von der Leitung 22 zweigt eine Leitung 23 zur Versorgung einer Dampfturbine 24 ab. Die Dampfturbine 24 treibt eine dem Speisewasserbehälter 16 nachgeschalteten Speisewasserpumpe 25 an.

Durch den Mitteldruckteil 5 der Dampfturbine 2 vollständig abgearbeiteter Dampf gelangt über eine Leitung 26 in den Niederdruckvorwärmer 17. Die Niederdruckvorwärmer 18 bis 20 erhalten über Leitungen 27 bis 29 Dampf aus Anzapfungen der Niederdruckteile 6 und 7. Durch die Dampfturbine 2 vollständig abgearbeiteter Dampf strömt durch eine Leitung 30 in einen Kondensator 31. Eine Kondensatorpumpe 32 befördert das Kondensat über die Speisewasserleitung 13 unter Aufheizung durch die Niederdruckvorwärmer 17 bis 20 in den Speisewasserbehälter 16.

Fig. 2 zeigt einen in Fig. 1 nicht dargestellten Wärmespeicher 33, der über einen zu der Leitung 11 parallelen Wärmetauscherkreis 34 Wärme aufnehmen und an einen Wärmetauscherkreis 35 Wärme abgeben kann. Ein Wärmetauscher 36 des Wärmetauscherkreises 35 überträgt diese Wärme auf das Speisewasser in der Speisewasserleitung 13.

Bei dem Wärmespeicher 33 kann es sich z.B. um einen Latentwärmespeicher mit einer Speichersubstanz handeln, die im Rahmen einer Phasenumwandlung Wärme bei konstanter Temperatur aufnimmt oder abgibt. Zur Wärmespeicherung bei der im vorliegenden Fall erforderlichen Temperatur von etwa 300 °C können beispielsweise Salzschmelzen dienen.

Eine dem Wärmespeicher 33 und den Wärmetauscherkreisen 34,35 entsprechende, für eine niedrigere Temperatur ausgelegte Einrichtung könnte alternativ oder zusätzlich an wenigstens einer der weiteren Dampfabzapfteitungen 21 sowie 26 bis 29 vorgesehen sein.

Die vorangehend beschriebene Kraftwerksanlage nimmt an der sog. Primärreglung der Netzfrequenz teil, d.h. die Kraftwerksanlage passt zur Aufrechterhaltung der Netzfrequenz ihre Leistung an kurzfristige Schwankungen der Netzlast an.

Sinkt kurzfristig die Netzlast, so wird eine entsprechende Verringerung der Leistung der Dampfturbine 2 durch Erhöhung der über die Leitung 11 abgezapften Dampfmenge bewirkt. Im Vergleich zur vorher abgezapften Normaldampfmenge wird damit eine größere Wärmemenge transportiert, deren gegenüber der Normaldampfmenge erhöhter Anteil zur Vorwärmung des Speisewassers nicht benötigt wird. Die aus der Leitung 11 in den Wärmetauscherkreis 34 abgezweigte Dampfmenge wird daher so eingestellt, dass dieser erhöhte Anteil der durch den Dampf transportierten Wärmemenge an den Wärmespeicher 33 abgegeben wird. Am Wärmeaustausch mit der Vorwärmerstrecke 12 ändert sich dadurch nichts.

Zur längerfristigen Anpassung der Turbinenleistung an die abgesenkte Netzlast kann die Leistung des Dampferzeugerkessels 1 entsprechend zurückgefahren und die über die Leitung 11 abgezapfte Dampfmenge wieder auf das normale, ggf. an die geänderte Leistung des Dampferzeugerkessels angepasste Maß eingestellt werden.

Bei kurzfristiger Erhöhung der Netzlast wird zur schnellen Steigerung der Turbinenleistung die über die Leitung 11 abgezapfte Dampfmenge verringert, so dass für den Betrieb der Turbine mehr Dampf zur Verfügung steht. Entsprechend wird weniger Wärme in die Vorwärmerstrecke transportiert. Die Fehlmenge kann nun durch Inbetriebnahme des Wärmetauscherkreises 35 ausgeglichen werden, welcher Wärme aus dem Wärmespeicher 33 in die Vorwärmerstrecke 12 leitet. Vorgewärmtes Speisewasser kommt am Dampferzeugerkessel 1 mit unveränderter Temperatur an.

Zur längerfristigen Anpassung an eine erhöhte Netzlast kann die Leistung des Dampferzeugerkessels entsprechend gesteigert und die über die Leitung 11 abgezweigte Dampfmenge wieder auf das normale, ggf. an die geänderte Leistung des Dampferzeugerkessels angepasste Maß erhöht werden.

Im Unterschied zu den bekannten, zur Primärreglung eingesetzten Regelsystemen, die auf Androsselung des in die Dampfturbine eingetragenen Dampfstromes oder dem Kondensatstoppverfahren beruhen, ist die Variation der abzapften Dampfmenge in Verbindung mit einer Zwischenspeicherung von Wärme bei verringerter Lastanforderung nicht mit einer Verringerung des Wirkungsgrades der Kraftwerksanlage verbunden.

## Patentansprüche

1. Regelsystem zur Anpassung der Leistung einer Dampfturbine (2) an eine veränderte Last, insbesondere zur kurzfristigen Anpassung der Leistung einer Kraftwerksdampfturbine an veränderte Netzlasten im Rahmen der Primärreglung, mit einem Wärmespeicher (33), der bei einer entsprechend verringerter Last erhöhten Menge von der Dampfturbine (2) abgezapften Dampfes dem abgezapften Dampf Wärme entnimmt und der bei einer entsprechend erhöhter Last verringerten Menge von der Dampfturbine (2) abgezapften Dampfes Wärme an einen die Dampfturbine (2) versorgenden Dampf-/Speisewasserkreislauf abgibt,
**dadurch gekennzeichnet,**
**dass** der Wärmespeicher (33) ein Wärme bei konstanter Temperatur aufnehmender bzw. abgebender Latentwärmespeicher ist, der zur Abgabe von Wärme an eine durch den abgezapften Dampf gespeiste Vorwärmestrecke (12) des Dampf-/Speisewasserkreislaufs und zur Aufnahme von Wärme aus einer die Vorwärmestrecke mit abgezapftem Dampf speisenden Leitung (11) vorgesehen ist.

2. Regelsystem nach Anspruch 1,
**dadurch gekennzeichnet,**
**dass** der Wärmespeicher (33) zur Wärmeaufnahme und Wärmeabgabe jeweils unter Konstanthaltung der in der durch den abgezapften Dampf gespeisten Vorwärmstrecke (12) auf das Speisewasser übertragenen Wärme vorgesehen ist.

3. Regelsystem nach einem der Ansprüche 1 oder 2,
**dadurch gekennzeichnet,**
**dass** der abgezapfte Dampf im Hochdruckbereich der Dampfturbine abgezapfter Dampf ist.

4. Regelsystem nach einem der Ansprüche 1 bis 3,
**dadurch gekennzeichnet,**
**dass** der Wärmespeicher (33) zur Abgabe der Wärme an den Dampf-/Speisewasserkreislauf im Hochdruckbereich des Dampf-/Speisewasserkreislaufs vorgesehen ist.

5. Regelsystem nach einem der Ansprüche 1 bis 4,
**dadurch gekennzeichnet,**
**dass** mehrere, Wärme bei unterschiedlichen Temperaturen aufnehmende bzw. abgebende Wärmespeicher (33) vorgesehen sind.

6. Regelsystem nach einem der Ansprüche 1 bis 5,
**dadurch gekennzeichnet,**
**dass** der Wärmespeicher (33) eine Salzschmelze als Speichersubstanz aufweist.

## Claims

1. Control system for matching the output of a steam turbine (2) to a changed load, particularly for short-term matching of the output of a power plant steam turbine to changed network loads as part of primary control, comprising a heat store (33), which extracts heat from the tapped steam when an increased amount of steam is tapped from the steam turbine (2) in accordance with a reduced load, and gives off heat to a steam/feed water circuit that supplies the steam turbine (2) when a reduced amount of steam is tapped from the steam turbine (2) in accordance with an increased load,
**characterized**
**in that** the heat store (33) is a latent heat store taking up or giving off heat at a constant temperature, which is provided for giving off heat to a pre-heating section (12) of the steam/feed water circuit that is fed by the tapped steam and for taking up heat from a conduit (11) that feeds the pre-heating section with tapped steam.

2. Control system according to Claim 1,
**characterized**
**in that** the heat store (33) is provided for taking up heat and giving off heat in each case while keeping constant the heat that is transferred to the feed water in the pre-heating section (12) that is fed by the tapped steam.

3. Control system according to either of Claims 1 and 2,
**characterized**
**in that** the tapped steam is steam that is tapped in the high-pressure region of the steam turbine.

4. Control system according to one of Claims 1 to 3,
**characterized**
**in that** the heat store (33) is provided for giving off the heat to the steam/feed water circuit in the high-pressure region of the steam/feed water circuit.

5. Control system according to one of Claims 1 to 4,
**characterized in that**
multiple heat stores (33) that take up or give off heat at different temperatures are provided.

6. Control system according to one of Claims 1 to 5,
**characterized**
**in that** the heat store (33) has molten salt as the storage substance.

## Revendications

1. Système de régulation pour l'adaptation de la puissance d'une turbine à vapeur (2) à une charge modifiée, en particulier pour l'adaptation à court terme de la puissance d'une turbine à vapeur d'une centrale électrique à des charges modifiées du réseau dans le cadre d'une régulation primaire, présentant un accumulateur de chaleur (33) qui prélève, dans le cas d'une quantité augmentée de vapeur soutirée de la turbine à vapeur (2) dans le cas d'une charge diminuée correspondante, de la chaleur de la vapeur soutirée et qui transmet, dans le cas d'une quantité diminuée de vapeur soutirée de la turbine à vapeur (2) dans le cas d'une charge augmentée correspondante, de la chaleur à un circuit de vapeur/eau d'alimentation alimentant la turbine à vapeur (2), **caractérisé en ce que** l'accumulateur de chaleur (33) est un accumulateur de chaleur latent absorbant ou transmettant de la chaleur à température constante, qui est destiné à transmettre de la chaleur à une zone de préchauffage (12) alimentée en vapeur soutirée du circuit de vapeur/eau d'alimentation et à absorber de la chaleur d'une conduite (11) alimentant la zone de préchauffage en vapeur soutirée.

2. Système de régulation selon la revendication 1, **caractérisé en ce que** l'accumulateur de chaleur (33) est destiné à l'absorption et à la transmission de chaleur à l'eau d'alimentation, tout en maintenant à chaque fois constante la chaleur transmise dans la zone de préchauffage (12) alimentée en vapeur soutirée.

3. Système de régulation selon l'une quelconque des revendications 1 ou 2, **caractérisé en ce que** la vapeur soutirée est de la vapeur soutirée dans la zone de haute pression de la turbine à vapeur.

4. Système de régulation selon l'une quelconque des revendications 1 à 3, **caractérisé en ce que** l'accumulateur de chaleur (33) est destiné à transmettre de la chaleur au circuit de vapeur/eau d'alimentation dans la zone de haute pression du circuit de vapeur/eau d'alimentation.

5. Système de régulation selon l'une quelconque des revendications 1 à 4, **caractérisé en ce qu'**il présente plusieurs accumulateurs de chaleur (33) absorbant ou transmettant de la chaleur à différentes températures.

6. Système de régulation selon l'une quelconque des revendications 1 à 5, **caractérisé en ce que** l'accumulateur de chaleur (33) présente un sel fondu comme substance d'accumulation.
